Europäisches Patentamt

European Patent Office

Office européen des brevets

(11) Publication number: **0 208 432**
**B1**

(12) **EUROPEAN PATENT SPECIFICATION**

(45) Date of publication of patent specification: 26.09.90

(51) Int. Cl.⁵: **B 29 C 41/04,** B 29 C 41/22,
B 29 C 41/36

(21) Application number: 86304551.4

(22) Date of filing: 13.06.86

(54) Mould method and apparatus for plastic shells.

(30) Priority: 01.07.85 US 750640

(43) Date of publication of application:
14.01.87 Bulletin 87/03

(45) Publication of the grant of the patent:
26.09.90 Bulletin 90/39

(84) Designated Contracting States:
DE FR GB IT SE

(56) References cited:
EP-A-0 128 710
EP-A-0 155 426
FR-A-1 303 853
GB-A-1 174 559
US-A-3 652 193
US-A-3 923 941

(73) Proprietor: DAVIDSON TEXTRON INC.
Industrial Park
Dover New Hampshire 03820 (US)

(72) Inventor: Gray, John D.
Middleton Road New Durham
New Hampshire 03955 (US)

(74) Representative: Hartley, David et al
Withers & Rogers 4 Dyer's Buildings Holborn
London, EC1N 2JT (GB)

Courier Press, Leamington Spa, England.

## Description

This invention pertains to a method and apparatus, according to the preambles of Claim 1 and Claim 5, respectively, for making hollow plastic shells, which are especially suitable for use in automobile trim components such as interior door panels.

The automotive industry has turned to the use of interior trim components such as door panels comprising a polyvinyl chloride shell. See, for example, the trim components disclosed in U.S. Patent No. 3,123,403. The acceptance of such components has been because *inter alia* this type of construction permits a wide latitude in styling and colour, and grain effects which are most desired particularly in the interior design of automobiles.

The current state of the art includes a preformed grained vinyl shell made from dry thermoplastic powder particles which are applied to a heated shell mould from a powder box to form a continuous monochromatic one-piece shell or to form a shell which includes two separate plastic shell sections formed from different coloured plastic joined at a connection joint.

The use of multi-colour plastic is also known in the manufacture of coloured filaments. Such manufacture includes use of a compartmented spinning head for making two-coloured yarn as disclosed in US—A—3,049,397 issued August 14, 1962 for Process of Making Spaced-Dyed Yarn.

Apparatus and method for multiple coloured thermoplastic floor materials are set forth in US—A—3,383,442 issued May 14, 1968.

Neither of the aforesaid methods and apparatus for manufacture or resultant manufacture is directed to a process or apparatus for manufacturing a single piece shell from powder material suitable for use as an interior panel component of an automobile on a continuous basis, programmed to produce articles of a different monochromatic colour or the same monochromatic colour or alternatively to produce such articles having two-tone colour segments.

EP—A—128,710 discloses a process for moulding a thin walled hollow plastic comprising

(1) heating an open-ended mould to a temperature near the fusing temperature of a powder thermoplastic material while locking a powder charge box to the mould with its open end in register to form a closed system;

(2) sealing the interior of the charge box from the interior of the charge box;

(3) thereafter concurrently rotating the respectively sealed locked charge box and mould until the charge box is located vertically above the mould; and

(4) thereafter releasing a powder charge from the mould for gravity flow into the mould cavity to build-up a skin of desired shape and size on the walls of the mould.

GB—A—1,174,559 discloses a process for moulding a single-piece plastic shell including the steps of preheating an open-ended mould to a temperature near the fusing temperature of a powder thermoplastic material; off-loading either a mould or one of the plurality of colour boxes and connecting said colour box to the mould to form a closed system; and rotating the colour box and mould in a powder casting sequence for releasing powder charges onto casting surfaces of the mould to build up a shell of desired shape and size.

GB—A—1,174,559 also discloses apparatus for moulding a thin-walled plastic shell in a heated open-ended mould from a charge of thermoplastic powder material released from an open-ended colour box joined to a heated mould to form a rotational mould assembly comprising preheat and cure ovens, and means for joining a mould to an off-loaded colour box in open-ended relationship.

In one aspect the invention provides a process as claimed in GB—A—1,174,559 characterised by selecting and positioning one of a plurality of colour boxes on a carousel with respect to a moulding station for conducting the mould process and thereafter returning the colour box to the carousel.

In another aspect this invention provides apparatus as disclosed in GB—A—1,174,559 characterised by carousel means having a plurality of separate colour boxes thereon; means for selecting and off-loading a colour box from said carousel; rotatable mould indexing means including a rotatable arm to control the attitude of said joined box and mould to distribute a coloured powder charge against the casting surfaces of the mould; and means for rotating said arm to carry said mould with respect to said preheat and cure ovens prior to and subsequent to off-loading from, and return of, said box to said carousel.

In a preferred embodiment, a preloaded open-ended powder box is filled with a predetermined quantity of different colour powder. The loaded open-ended powder box is carried by an indexable carrier that off-loads the box from the carrier to a mould carrier and frame assembly. The powder box is clamped to an open-ended mould on the carrier to form a closed system. The closed system is rotated so that the charge box releases the powder from the powder box compartments to flow evenly across the open end of the mould by gravity to produce a uniform thin shell across heated casting surfaces of the mould. Joint seals can be provided in association with two-colour compartments to produce distinct strips of colour in a single-piece article with an integral joint formed between each colour. Such two-tone pieces and tooling for manufacturing both pieces are set forth in co-pending United States Patent application S.N. 614,004 filed May 25, 1984, and commonly assigned.

Plastics moulding apparatus of the invention can be used for forming a thin walled single plastic part of a colour determined by the programmed indexation of the powder box carrier. The coupled powder box and mould can be controlled so as to dispose the charge box with respect to the mould for gravity flow of powder from the powder box into the mould so that flow of powder into the mould covers uniformly heated separate surfaces of the mould with either the same or different colours of plastic connected at a joint region to form a single part with at least two colour panels thereacross.

The mould-frame and mould apparatus are preferably carried by indexable apparatus with respect to a pre-heat oven; the casting station; a cure oven; a cooling station; and a stripping position. In one embodiment the mould-frame and mould are carried on a multiple station manufacturing unit or octopus with a rotatable carriage and individual robot arms that reciprocate and rotate to off-load the powder box while casting powder to a mould.

In another embodiment the mould-frame and mould are carried by separate robot which has an extendable arm that will position the mould at separate processing stations including a casting station.

Other advantages and a more complete understanding of the invention will be apparent to those skilled in the art from the succeeding detailed description of preferred embodiments of the invention with reference to the accompanying drawings.

Figure 1 is a perspective view of a powder box carrier and associated moulding apparatus of the present invention shown with associated controls for programming indexing of a particular colour box onto the moulding apparatus;

Figure 2 is a diagrammatic view of another embodiment of moulding apparatus of the inventive apparatus;

Figure 3 is a diagrammatically shown view of the powder box carrier and associated moulding apparatus of the invention in association with a regrind fill station;

Figures 4 to 10 is a diagrammatically shown process sequence of one embodiment of the process of the present invention; and

Figure 11 is a diagrammatically shown view of another embodiment of a powder box carrier and moulding apparatus.

The process and apparatus of the preferred embodiments of the present invention will be with reference to the production of plastic thin-walled shells for a typical automotive part such as an interior door panel, consoles and instrument panels. However, the invention has application in the manufacture of other parts which are desirably processed by pre-programming production of different runs to have the same or different colour.

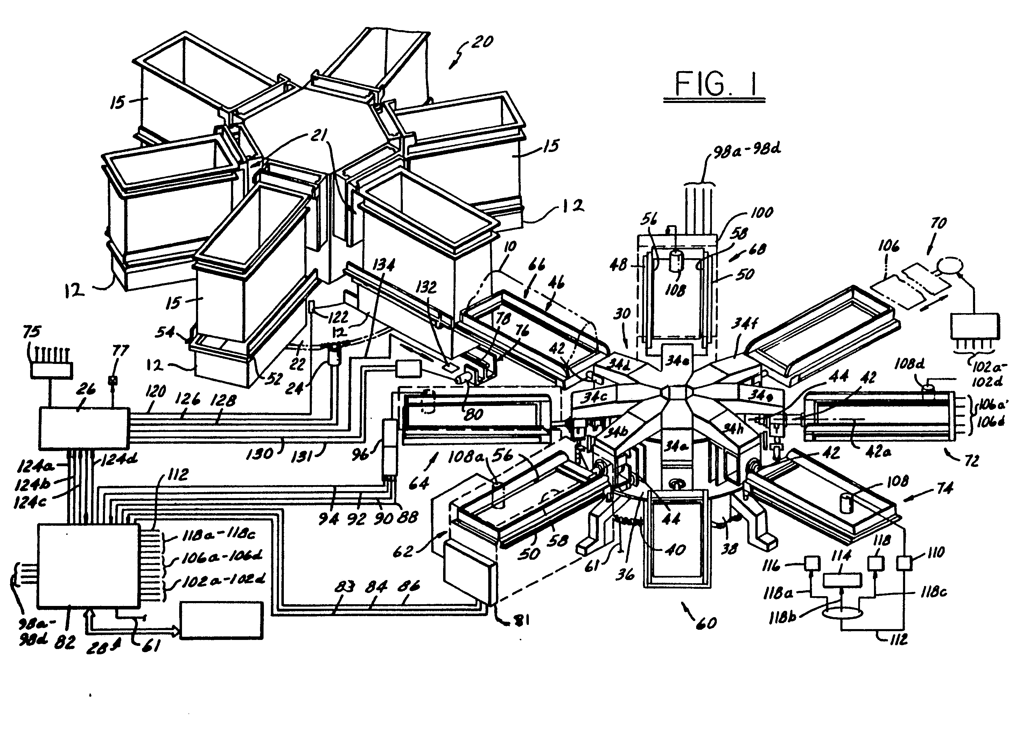

Figure 1 shows a typical automobile door panel application for either monochromatic or multi-colour, single-piece interior plastic shells. The shell, preferably made of polyvinyl chloride material, is backed by a layer of polyurethane foam bonded to the shell by a mold process such as in US—A—3,123,403, issued March 3, 1964 for Automobile Arm Rest. An interior reinforcing insert may be connected at an outer shell.

The shell is a one-piece plastic part either of monochromatic color or with an integral first panel of a drycast plastic having a first color an integral joint to a second panel having a second color contrasting or complementing the color of the first panel or other interior components. For example, the upper panel can be red, blue, yellow or beige to contrast with or complement the interior color of seats, headliners, crashpads and the like. The lower panel can be colored a deeper complementary tone color of a character which has a low impact or scuff display character. Such two-tone structures and tooling for producing the casting of two colors is set forth in the aforementioned US—A—614,004.

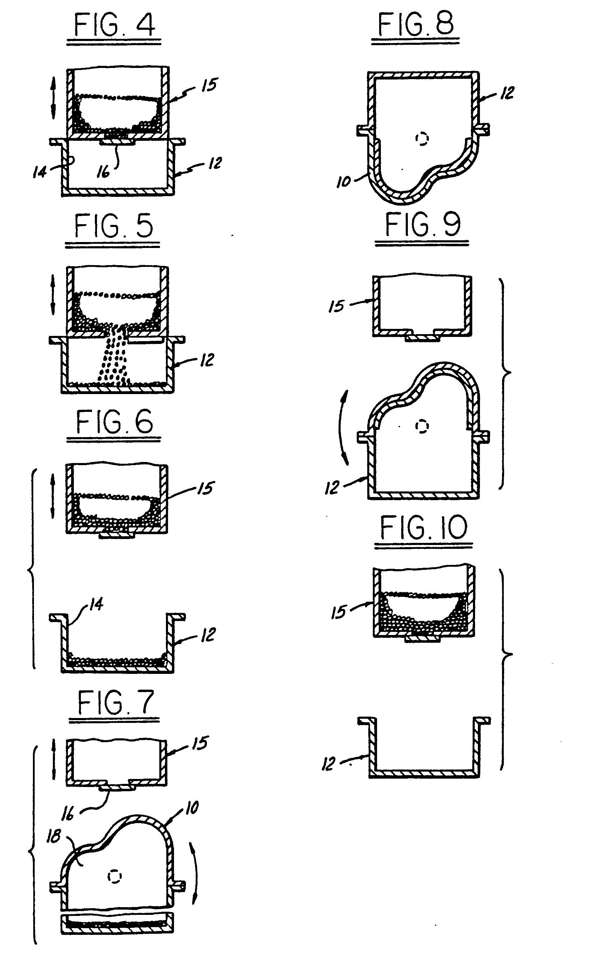

Referring to Figures 4—10, a powder molding process is schematically shown as including a selectively heated mold 10.

The box 12 includes an open end 14. The box 12 is supplied from a reservoir 15 having a distribution plate 16 operated to cast powder through an opening to fill box 12.

Clamp means, not shown, join and seal the powder box 12 to mold 10 when the box 12 is in the positions shown in Figures 7—9.

As a result, the interior of box 12 and the interior of mold 10 form a closed system 18 having one or more powder charges in the box 12.

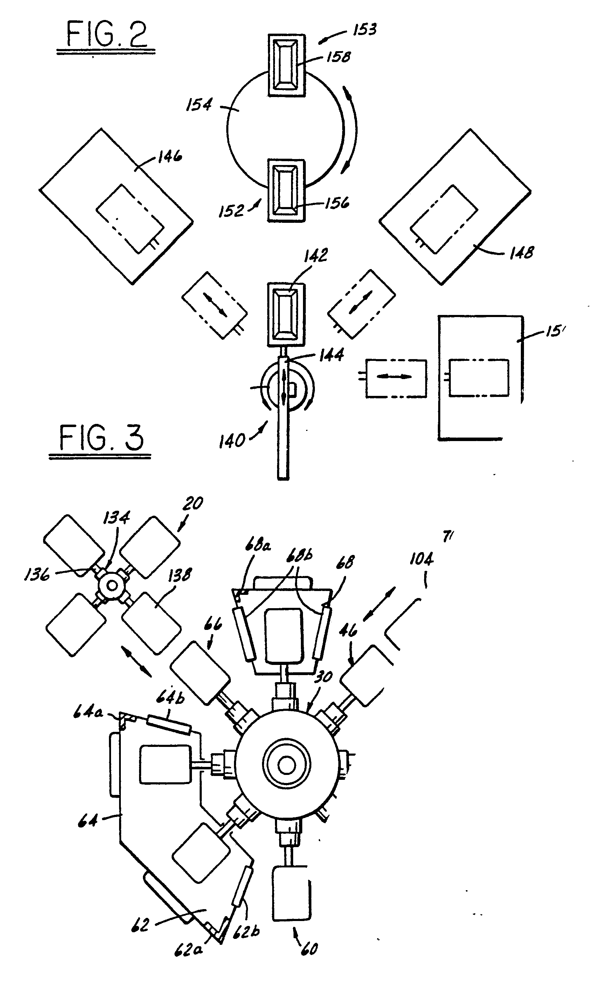

In accordance with the process and apparatus of the present invention, the box 12 is one of many carried on a color carousel 20, best shown in Figures 1 and 3.

The color carousel 20 has separate elevators 21 each carrying a reservoir box 15 with a charge of plastic powder material of a different colour.

The color carousel 20 concurrently rotates the boxes 12 from a bull gear 22 driven by a motor 24 which is indexable in two directions under the control of a color carousel controller 26. The controller 26 is associated with a programmable logic controller 28 to establish which one of the boxes 12 will be off-loaded to casting machine 30.

The programmable controller 28 includes a master control station (MCS 32) with either a paper tape or cassette input. The MCS 32 further includes a CRT indicating the color programmed for each arm of a casting machine 30.

The casting machine 30 includes eight arms 34a—34h each supported on a rotatable carriage 36 which is driven by a motor 38 and transmission through a bull gear 40.

Each arm 32a—32h of the casting machine 30 includes an operating shaft 42 which is coupled to a transmission 44 which will rotate the shaft 42 about its longitudinal axis 42a.

Each arm 34a—34h is secured to a mold frame 46 that has spaced parallel tracks 48, 50 that will support side flanges 52, 54 on each of the powder boxes 12 when the powder box 12 is off-loaded from the color carousel to one of the frames 46.

Each frame 46 further includes upper tracks 56, 58 for supporting a mold 10 one of which is shown in dotted line at arm 34d shown at an operator station 60.

A mold 10 is initially loaded at operator station 60. The casting machine will drive it sequentially with respect to a first oven station 62; a second oven station 64; a color molding station 66; a third oven station 68; a filler molding station 70; a fourth oven station 72; and a cooling station 74.

When the mold 10 is aligned with the color molding station 66 a preselected color has been indexed to locate a powder box of a given color in an off-loading position. A supply reservoir 15 is filled with one of the selectable colors is raised on elevator 21 to clear a precisely charged color box 12 which is then off-loaded by a conveyor 76 including a drive chain 78 and motor 80.

The off-loaded powder box 12 is supported by frame 46. Box 12 and heated mold 10 are clamped at station 66, shown in Figure 7. Then the frame 46 is rotated to distribute powder into the mold as shown in Figure 8. The frame 46 is rotated to return excess powder to the powder box 12 as shown in Figure 9. Thereafter the powder box 12 is returned to the carousel 20 to be realigned with the raised reservoir 15 as shown in Figure 10. The reservoir 76 and powder box 12 are then returned to their original color loading position shown in Figure 4. The distributor plate 16 is activated by a motor controlled by signals from a refill command circuit 75. An air solenoid 77 is provided to control air sweeps or the like in the system.

The programmable controller 28 is programmed so that each arm 34a—34h is programmed for rotation of the mold frame 46 to determine the proper mold attitude during operation of the casting machine 32. A position sensor line 61 is provided to receive signals from transducers that indicate position of the mould frame 46 to provide such information to controller 28.

At oven station 62 oven controls 81 are provided to both indicate and set temperatures in the oven. The oven controls 81 include start-up temperature signal line 83 running from interface and logic circuits 82; a temperature-reached signal line 84 from the control 78 to the interface and logic circuits 82 and an oven door open signal line 86 from the circuits 82.

A like start-up temperature line 88; temperature reached signal line 90; oven door open signal line 92; and temperature-reached signal line 94 is provided between circuits 82 and oven controls 96 for the second oven 64. The first and second ovens preferably are two station pre-heat ovens which are gas fired or equivalently heated. In one working embodiment a 138.9°C (250°F) mould temperature range is controlled.

Oven station 68 is a cure oven. It has start signal, ready signal, door opening and temperature setting signal lines 98a—98d interacting between an oven controller 100 and the circuits 82.

Station 70 is a filler moulding station in which a second charge of reground material is transferred from a powder box top filled with reground material. In the illustrated arrangement, start, ready, move tray and air signal lines 102a—102d are provided to control a conveyor 104 to move a powder box 106 of reground material to the frame 46. The filler moulding station will be operated to cast a second charge of powder into a mould if desired for a particular part.

Oven station 72 is a second cure station which has an oven controller 106 with signal lines 106a—d which are connected to control circuits 82 to control start up temperature; ready temperature; oven door; and temperature setting of the oven, respectively.

Infrared sensors 108a—108c are provided at ovens 62, 64, 68 and 72 to feed back oven temperature signals to the respective oven controls.

Cooling station 74 has an infrared sensor 108 that is connected through a signal conditioner circuit 110 to produce an actual temperature signal on line 112 to programmable controller 28 that is programmed to energize an air drive system 114; and air valve 116 and a cooling water valve 118 via control signal lines 118a—c to produce a selective cooling of the exterior surface of the mold. Following cooling the molded part is stripped from the mold at the unload/operators station.

The color carousel controller 26 converses with controller 28 via a position line 120 that sends a signal of correct carousel position as indicated by position sensory means 122.

The programmable controller provides air; desired color; move powder box and start signals to color carousel controller via lines 124a—124d, respectively.

These signals are utilized by color carousel controller 26 to produce a speed signal and direction signal on line 126, 128 to motor 24 for controlling the speed and direction of rotation of the carousel. Speed and direction signals on lines 130, 131 are directed to conveyor motor 80 at the color molding station 66. If desired, a vibrator 132 can be operated in response to a signal on line 134 to vibrate the powder box prior to the color molding operation.

The primary control for advancing of the casting arms will be by mold temperature in the first cure oven 68. This oven will be temperature controlled at some predetermined temperature within ±0.56°C (±1°F). When the mould temperature has reached a predetermined point, movement of the arms 32a—32h will be initiated. It must be recognised that with different moulds on each arm and with varying ambient temperatures, the time required to reach proper mould temperature in the first cure oven 60 will not always be the same. Because of this, control of the pre-heat oven will be somewhat different. It is proposed that the pre-heat oven temperature be controlled such that the mould temperature be maintained with a 7.2°C (13°F) range; adaptive control may be used that will compensate for changes in ambient temperature and, therefore, differences of mould temperature as it enters the oven 62. The control also is programmed to recognise which mould is in the pre-heat oven and also adjust for differences in mould types.

Because the mould temperature exiting the pre-heat oven cannot be maintained within precise limits, the casting time will be controlled as a function of temperature. The mould temperature will be sensed immediately prior to the casting, and this temperature will determine the dwell time.

The second cure oven 72 will control mould temperature through modulation of the oven temperature and will not affect the cycle in any way.

As best shown in Figure 3, each oven has an outer enclosure 62a, 64a, 68a and 72a with movable access doors 62b, 64b, 68b and 72b which enable the rotating arms to clear the enclosure and which close to retain heat in the enclosures. In one embodiment of Figure 3 the colour carousel 20 is in the form of a multiple arm robot 134 which has arms 136 each of which reciprocates to move a powder box 138 to the casting machine 30.

The embodiment of Figure 2 is an embodiment in which a centrally located robot 140 carries a mould frame 142. The mould frame 142 is carried on an arm 144 which reciprocates with respect to a base 146. The arm 144 and frame are pivoted on base 146 to move the frame 142 into and out of a preheat oven 146; a cure oven 148 and a cooling station 150. In this embodiment, casting occurs at a solid color station mold station 152 or two-tone molding station 153 on a rotary carousel 154. A solid color powder box 156 is connectable to a heated mold on frame 142 when it is off-loaded at station 152. The box 156 is rotated with the off-loaded mold to cast powder at station 152. A second two-tone station 153 can be provided with a two-compartment box 158 to cast two colors (as set forth in the aforementioned co-pending United States Application 614,004).

Following casting at either station 152, 153 the mold with powder cast thereon is carried by robot 140 to the cure oven 148 and cooling station 150.

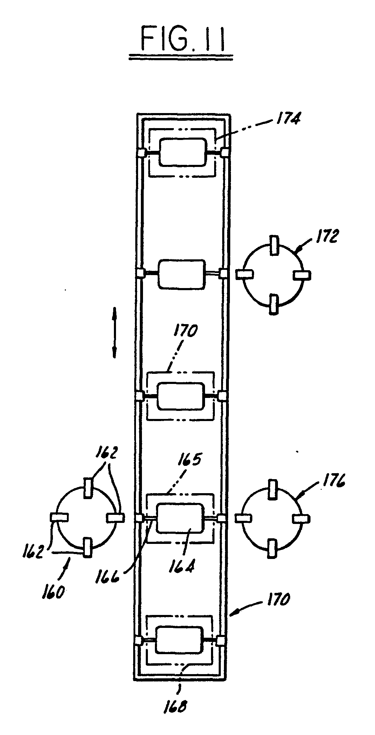

Yet another embodiment of the invention is set forth in Figure 11 wherein a said color carousel 160 is associated with a continuous belt conveyor/casting apparatus 170. The carousel 160 has four individual solid color powder boxes 162. The boxes are advanced by side loader lines (either robots or conveyors) to alignment with a heated mold 164 at a color molding station 165. The box and mold 146 are joined and rotated on axis 166 to cast powder. The mold 164 is preheated at a preheat oven 168 (shown in outline). After casting, the powder box is returned to the carousel and the mold with cast material is advanced to a cure oven 170; a second fill station 172; and a second cure station 174.

The return line includes a cooling station (not shown). A two-tone color carousel 176 with four boxes with two color distribution can be provided at the color molding station 165.

In the aforesaid embodiment the mold frames (carriers) contain the locking units and move along the chain or track apparatus. Arms or mechanisms of the molds are operated outside the oven as much as possible so as not to over-expose the hardware to excessive heat.

Customer color changes are made by container changes. For example, changes from a Ford red to a GM red can be accomplished without any lost production merely by changing containers on the carousels. Color boxes on the carousels can be moved to the color loading area, released and held to the color carousel platform.

The platform or components thereon can then move in alignment with the mold and in interlocking relationship, at which point the casting cycle would begin.

Each concept is adaptable for two-fill (Drysol shell with foam backing) operation.

This manufacturing concept leads itself to a one on one foaming line and enables a manufacturer to adopt the "just-in-time" supply concepts because of the scheduling flexibility that is inherent in the apparatus and process.

**Claims**

1. A process for moulding a single-piece plastic shell including the steps of preheating an open-ended mould (10) to a temperature near the fusing temperature of a powder thermoplastic material; off-loading either a mould or one of the plurality of colour boxes (12) and connecting said colour box to the mould to form a closed system; and rotating the colour box and mould in a powder casting sequence for releasing powder charges onto casting surfaces of the mould to build up a shell of desired shape and size; characterised by selecting and positioning one of a plurality of colour boxes (12) on a carousel (20) with respect to a moulding station (66) for conducting the mould process and thereafter returning the colour box to the carousel.

2. A process as claimed in claim 1, wherein the casting step includes distributing powder charges of different colours from the colour box (12) against casting surfaces of a preheated mould (10).

3. A process as claimed in claim 1 or claim 2, further comprising providing a separately controlled source of powder (15) for each colour box (12) and selectively refilling the colour box when it is located on the carousel (20) during indexing of another of the boxes to the moulding station (66).

4. A process as claimed in any preceding claim wherein the colour box carousel (20) is preprogrammed to position it for off-loading a selected colour box (12) at the moulding station (66); and the speed and direction fo drive of the colour carousel (20) is varied to position the preprogrammed box selection at the moulding station (66).

5. Apparatus for moulding a thin-walled plastic shell in a heated open-ended mould (10) from a charge of thermoplastic powder material released from an open-ended colour box (12) joined to a heated mould (10) to form a rotational mould assembly comprising preheat (62, 64) and cure ovens (68) and means (46) for joining a mould to an off-loaded colour box in open-ended relationship; characterized by a carousel means (20) having a plurality of separate colour boxes (12) thereon; means for selecting and off-loading (76, 78) a colour box from said carousel; rotatable mould indexing means (30) including a rotatable arm (32) to control the attitude of said joined box and mould to distribute a coloured powder charge against the casting surfaces of the mould; and means (38, 40) for rotating said arm to carry said mould with respect to said preheat and cure ovens prior to and subsequent to off-loading from, and return of, said box to said carousel.

6. Apparatus as claimed in claim 5, wherein said colour box (12) includes a pair of side flanges (52, 54) and a compartment having a predetermined charge of plastic powder; said arm (32) has a mould frame (46) including means (56, 58) for connecting said side flanges (52, 54) thereon for locating said box (12) therein;

and means are provided for engaging said mould with said frame for receiving powder from the box compartment when the box and mould are joined and rotated.

7. Apparatus as claimed in claim 5 or claim 6 wherein said mould indexing means (30) includes a plurality of arms (32a—h), said apparatus further comprising a mould frame (46) on each of said arms, means for coupling a heated mould to each of said frames, means (42, 44) for separately rotating each of said arms and means selectively programming each of said arms to be rotated at a moulding station (66) to control the attitude of said frame for casting mould material onto the mould (12) only at said moulding station; said carousel (20) being indexable to select and off-load a colour box of a desired shade at said moulding station so as to program a production of colour moulded parts while continuously operating said mould indexing means with respect to said moulding station.

8. Apparatus as claimed in any of claims 5 to 7 wherein said carousel means includes a plurality of powder supply reservoir means (15), and further comprising means (16) for selectively filling one or more of the colour boxes (12) from said reservoir means on said carousel means; and means including a conveyor (78) to off-load a colour box following fill from said reservoir means to said mould indexing means (30) for transferring powder from the box to a preheated mould.

9. Apparatus as claimed in claim 8, further comprising elevator means (21) on said carousel means (20) for positioning said reservoir means (15) in raised and lowered positions with respect to one of said colour boxes, said colour box being off-loadable from said carousel means (20) only when said reservoir means (15) is in its raised position.

10. Apparatus as claimed in any of claims 5 to 9, further comprising a cure cooling station 74, said rotatable indexing means (30) being selectively indexable with respect to said ovens (62, 64, 68) and enclosures (Figure 3) for said ovens and cooling station, each of said ovens having access doors (62b, 64b, 68b) thereto and means for programming said access doors to open and close upon indexing of said mould indexing means (30) with respect thereto.

**Patentansprüche**

1. Verfahren zum Gießformen einer einstückigen Kunststoffschale mit den Schritten der Vorerhitzung einer offenendigen Form (10) auf eine Temperatur in der Nähe der Schmelztemperatur eines thermoplastischen Pulvermaterials, des Abgebens entweder einer Form oder eines Farbkastens einer Vielzahl von Farbkästen (12) und des Verbindens des Farbkastens mit der Form zur Bildung eines geschlossenen Systems sowie des Drehens des Farbkastens und der Form in einer Pulvergießsequenz für die Freigabe von Pulverchargen auf Gießoberflächen der Form zur Schaffung einer Schale mit einer gewünschten Form und Größe, gekennzeichnet durch Wählen und Positionieren eines Farbkastens der Vielzahl von Farbkästen (12) auf einem Karussell (20) bezüglich einer Gießformstation (66) zur Durchführung des Gießformprozesses und dem anschließenden Rückführen des Farbkastens zu dem Karussell.

2. Verfahren nach Anspruch 1, bei welchem der Gießschritt das Verteilen von Pulverchargen verschiedener Farben aus dem Farbkasten (12) auf die Gießoberflächen einer vorerhitzten Form (10) umfaßt.

3. Verfahren nach Anspruch 1 oder Anspruch 2, welches weiterhin das Vorsehen einer gesondert gesteuerten Pulverquelle (15) für jeden Farbkasten (12) und das selektive Nachfüllen des Farbkastens aufweist, wenn er auf dem Karussell (20) angeordnet ist, während ein anderer Kasten zu der Gießformstation (66) weitergechaltet wird.

4. Verfahren nach einem vorhergehenden Anspruch, bei welchem das Farbkastenkarussell (20) vorprogrammiert ist, um es für die Abgabe eines ausgewählten Farbkastens (12) an der Gießformstation (66) zu positionieren, und bei welchem die Geschwindigkeit und Richtung des Antriebs des Farbkarussells (20) geändert wird, um die vorprogrammierte Kastenauswahl an der Gießformstation (66) zu variieren.

5. Vorrichtung zum Gießformen eines dünnwandigen Kunststoffschale in einer erhitzten offenendigen Form (10) aus einer Charge eines thermoplastischen Pulvermaterials, das aus einem offenendigen Farbkasten (12) freigegeben wird, der mit einer erhitzten Form (10) zur Bildung einer Drehgießformanordnung verbunden ist, welche Vorheizöfen (62, 64) und Härteöfen (68) sowie Einrichtungen (46) zum Verbinden einer Form mit einem abgegebenen Farbkasten in offenendiger Beziehung zu verbinden, gekennzeichnet durch eine Karusselleinrichtung (20), welche eine Vielzahl von getrennten Farbkästen (12) darauf aufweist, durch Einrichtungen (76, 78) zum Wählen und Abgeben eines Farbkastens von dem Karussell, durch Weiterschalteinrichtungen (30) für die drehbare Gießform mit einem drehbaren Arm (32) zur Steuerung der Lage von Kasten und Form, die miteinander verbunder sind, um eine farbige Pulvercharge auf die Gießoberflächen der Form zu verteilen, und durch Einrichtungen (38, 40) zum Drehen des Arms für das zum Tragen der Form bezüglich der Vorheiz- und Härtungsöfen vor und nach der Abgabe des Kastens an das Karussell und der Rückführung des Kastens zu dem Karussell.

6. Vorrichtung nach Anspruch 5, bei welcher der Farbkasten (12) ein Paar von Seitenflanschen (52, 54) und eine Kammer aufweist, die eine vorher festgelegte Charge aus Kunststoffpulver aufweist, wobei der Arm (32) einen Gießformrahmen (46) mit einer Einrichtung (56, 58) zum Verbinden der Seitenflansche (52, 54) daran aufweist, um den Kasten (12) daran zu positionieren, und bei welcher Einrichtungen vorgesehen sind, um die Gießform mit dem Rahmen für die Aufnahme des Pulvers aus der Kastenkammer in Eingriff zu bringen, wenn der Kasten und die Gießform verbunden sind und gedreht werden.

7. Vorrichtung nach Anspruch 5 oder Anspruch 6, bei welcher die Weiterschalteinrichtungen (30) für die Gießform eine Vielzahl von Armen (32a bis 32h) aufweist, und die Vorrichtung weiterhin einen Gießformrahmen (46) an jedem der Arme, eine Einrichtung zum Kuppeln einer beheizten Gießform mit jedem der Rahmen, eine Einrichtung (42, 44) zum gesonderten Drehen eines jeden der Arme und Einrichtungen zum selektiven Programmieren eines jeden der Arme und Einrichtungen zum selektiven Programmieren jedes der Arme für ein Drehen in eine Gießformstation (66) aufweist, um die Lage des Rahmens für das Gießen von Formmaterial auf die Gießform (12) nur in der Gießformstation zu steuern, wobei das Karussell (20) weiterschaltbar ist, um einen Farbkasten einer gewünschten Farbtönung zu wählen und an der Gießformstation abzugeben, um so eine Produktion von farbigen Formteilen zu progrmamieren, während die Weiterschalteinrichtungen für die Gießform bezüglich der Gießformstation kontinuierlich betrieben wird.

8. Vorrichtung nach einem der Ansprüche 5 bis 7, bei welcher die Karusselleinrichtung eine Vielzahl von Speichereinrichtungen (15) für die Pulverbeschickung aufweist und weiterhin Einrichtungen (16) zum selektiven Füllen eines Farbkastens oder mehrerer Farbkästen (12) aus der Speichereinrichtung an der Karusselleinrichtung sowie Einrichtungen vorgesehen sind, die einen Förderer (78) zum Abgeben eines Farbkastens nach dem Füllen aus der Speichereinrichtung an die Weiterschalteinrichtungen (30) für die Gießform einschließt, um Pulver au dem kasten auf eine vorerhitze Form zu überführen.

9. Vorrichtung nach Anspruch 8, welche weiterhin eine Hebeeinrichtung (21) an der Karusselleinrichtung (20) zum Positionieren der Speichereinrichtung (15) in einer angehobenen und abgesenkten Lage bezüglich eines der Farbkästen aufweist, wobei der Farbkasten nur dann von der Karusselleinrichtung (20) abgebbar ist, wenn die Speichereinrichtung (15) sich in ihrer angehobenen Lage befindet.

10. Vorrichtung nach einem der Ansprüche 5 bis 9, welche weiterhin eine Aushärtungskühlstation (74) aufweist, wobei die drehbaren Weiterschalteinrichtungen (30) selektiv bezüglich der Öfen (62, 64, 68) und Ummantelungen (Fig. 3) für die Öfen und die Kühlstation weiterschaltbar sind und jeder der Öfen Zugangstüren (62b, 64b, 68b) und Einrichtungen zum Programmieren der Zugangstüren aufweist, um nach dem Weiterschalten der Weiterschalteinrichtungen (30) für die Gießform diesbezüglich zu öffnen und zu schließen.

**Revendications**

1. Procédé pour le moulage de coquilles en matière plastique formées en une seule pièce comprenant les étapes suivantes: préchauffage d'un moule (10) à extrémité ouverte jusqu'à une température voisine de la température de fusion d'une matière thermoplastique en poudre; déchargement soit d'un moule, soit d'une parmi plusieurs boîtes (12) d'une couleur donnée et mise en liaison de ladite boîte d'une couleur avec le moule pour former un système clos; et rotation d'une boîte d'une couleur et du moule dans une séquence de coulage de la poudre pour distribuer des charges de la poudre sur les surfaces de moulage du moule de façon à former une coquille de la forme et de la dimension désirées; caractérisé en ce qu'on sélectionne et positionne l'une parmi la pluralité des boîtes (12) d'une couleur donnée sur un carrousel (20) par rapport à une station de moulage (66) pour conduire le procédé de moulage, après quoi on ramène la boîte de couleur sur le carrousel.

2. Procédé selon la revendication 1 dans lequel l'étape de coulage comprend la distribution de charges de poudre de diverses couleurs à partir de la boîte de couleur (12) contre les surfaces de moulage d'un moule préchauffé (10).

3. Procédé selon la revendication 1 ou la revendication 2 comprenant en outre la prévision d'une source commandée séparément d'alimentation de poudre (15) pour chaque boîte de couleur (12) et le remplissage sélectif de la boîte de couleur lorsqu'elle est située sur le carrousel (20) pendant l'indexage d'une autre des boîtes à la station de moulage (66).

4. Procédé selon l'une quelconque des revendications précédentes dans lequel le carrousel (20) des boîtes de couleur est pré-programmé de façon à le positionner pour qu'il effectue la décharge d'une boîte (12) de couleur sélectionnée à la station de moulage (66); et la vitesse et la direction d'entraînement du carrousel de couleur (20) varient de façon à positionner la boîte choisie pré-programmée à la station de moulage (66).

5. Appareil pour le moulage de coquilles en matière plastique à paroi mince dans un moule (10) à extrémité ouverte chauffé et ce à partir d'une charge d'une matière en poudre thermoplastique délivrée à partir d'une boîte (12) d'une couleur présentant une extrémité ouverte et reliée à un moule chauffé (10) de façon à constituer un ensemble formant moule rotatif comprenant des fours de préchauffage (62, 64) et de cuisson (68) ainsi que des moyens (46) pour relier un moule à une boîte de couleur déchargée avec leurs extrémités ouvertes en regard; caractérisé en ce qu'il comprend des moyens de carrousel (20) comportant plusieurs boîtes (12) de couleur séparées montées sur lui; des moyens pour sélectionner et décharger (76, 78) une boîte de couleur à partir dudit carrousel; des moyens d'indexation (30) d'une moule rotatif comprenant un bras rotatif (32) qui commande l'attitude de la boîte et du moule reliés l'un à l'autre de façon à distribuer une charge d'une poudre colorée contre les surfaces de moulage du moule; et des moyens (38, 40) pour faire tourner ledit bras et porter ledit moule par rapport auxdits fours de préchauffage et de cuisson avant et après le déchargement de ladite boîte amenée depuis ledit carrousel et ramenée audit carrousel.

6. Appareil selon la revendication 5 dans lequel ladite boîte (12) de couleur comprend une paire de flasques latéraux (52; 54) et un compartiment recevant une charge de prédéterminée d'une poudre en matière plastique; ledit bras (32) comportant un cadre de moulage (46) comprenant des moyens (56, 58) pour assurer la liaison avec lesdits flasques latéraux (52, 54) pour recevoir ladite boîte (12) sur le cadre; et des moyens sont prévus pour engager ledit moule avec ledit cadre pour recevoir la poudre provenant du compartiment de la boîte lorsque la boîte et le moule sont reliés entre-eux et retournés.

7. Appareil selon la revendication 5 ou la revendication 6 dans lequel lesdits moyens d'indexage (30) du moule comprennent une pluralité de bras (32a—h), ledit appareil comprenant en outre un cadre de moule (46) sur chacun desdits bras, des moyens pour coupler un moule chauffé à chacun desdits cadres, des moyens (42, 44) pour faire tourner séparément chacun desdits bras et des moyens programmant sélectivement chacun desdits bras qui doit tourner à une station de moulage de façon à commander l'attitude dudit cadre pour couler le matériau de moulage dans le moule (12) seulement à la station de moulage; ledit carrousel (20) étant indexable pour choisir et décharger une boîte de couleur de la nuance désirée à ladite station de moulage de façon à programmer une production de parties moulées en couleur tout en faisant fonctionner de façon continue lesdits moyens d'indexage des moules par rapport à ladite station de moulage.

8. Appareil selon l'une quelconque des revendications 5 à 7 dans lequel lesdits moyens de carrousel comprennent une pluralité de moyens (15) formant réservoirs d'approvisionnement de poudre, et comprenant en outre des moyens (16) pour sélectivement remplir une ou plusieurs des boîtes (12) de couleur à partir desdits moyens de réservoirs montés sur ledit carrousel; et des moyens comprenant un convoyeur (78) pour décharger une boîte de couleur à la suite de son remplissage à partir desdits moyens formant réservoirs en direction desdits moyens d'indexation (30) de moulage de façon à transférer la poudre depuis la boîte vers un moule de préchauffage.

9. Appareil selon la revendication 8 comprenant en outre des moyens élévateurs (21) sur ledit carrousel (20) pour positionner lesdits moyens formant réservoirs (15) dans des positions soulevées et abaissées par rapport à l'une desdites boîtes de couleur, ladite boîte de couleur étant déchargeable à partir dudit carrousel (20) seulement lorsque lesdits moyens (15) formant réservoirs sont dans la position soulevée.

10. Appareil selon l'une quelconque des revendications 5 à 9 comprenant en outre une station (74) de refroidissement après cuisson, lesdits moyens d'indexation rotatifs (30) étant sélectivement indexables par rapport auxdits fours (62, 64, 68) et enceintes (Figure 3) pour lesdits fours et pour la station de refroidissement, chacun desdits fours comportant des portes d'accès (62b, 64b, 68b) qui les équipent et des moyens pour programmer lesdites portes d'accès de façon qu'elles s'ouvrent et se ferment suivant l'indexation desdits moyens (30) d'indexation du moule par rapport à eux.

FIG. I

1

FIG. 2

FIG. 3

EP 0 208 432 B1

FIG. 4

15
14
16
12

FIG. 5

12

FIG.6

15

14
12

FIG. 7

15
16
18
10

FIG. 8

12
10

FIG. 9

15
12

FIG. 10

15
12

3

## FIG. 11